# NEUE EUROPÄISCHE PATENTSCHRIFT

(11) **EP 1 652 703 B2**
(45) Veröffentlichungstag und Bekanntmachung des Hinweises auf die Entscheidung über den Einspruch: **19.09.2012**
(45) Hinweis auf die Patenterteilung: 29.04.2009
(21) Anmeldenummer: 04292583.4
(22) Anmeldetag: 29.10.2004
(51) Int. Cl.: B60H 1/22, B60H 1/00

(54) **Elektrische Heizungsanordnung für ein Kraftfahrzeug**
Electric heating device for a vehicle
Chauffage éléctrique pour véhicule

(43) Veröffentlichungstag der Anmeldung: 03.05.2006
(73) Patentinhaber: Behr France Rouffach SAS, 68250 Rouffach (FR)
(72) Erfinder: Brun, Michel, 68740 Rustenhart (DE); Denny, Geoffrey, 68100 Mulhouse (FR); Eckerlen, Gerard, 68250 Rouffach (DE); Gogmos, Erwan, 56600 Lanester (FR); Miss, Pascal, 67600 Sélestrat (FR); Mougey, Mathieu, 68190 Ensisheim (FR); Schmittheisler, Christophe, 676800 Epfig (FR)
(74) Vertreter: Grauel, Andreas

(56) Entgegenhaltungen:
- EP-A- 1 353 131
- EP-A1- 1 432 287
- DE-A1- 2 818 457
- DE-A1- 4 305 439
- DE-A1- 19 738 318
- PATENT ABSTRACTS OF JAPAN Bd. 009, Nr. 152 (M-391), 27. Juni 1985 (1985-06-27) & JP 60 029323 A (NIPPON DENSO KK), 14. Februar 1985 (1985-02-14)
- MOLT K: "PTC-HEIZUNG" ATZ AUTOMOBILTECHNISCHE ZEITSCHRIFT, FRANCKH'SCHE VERLAGSHANDLUNG. STUTTGART, DE, Bd. 100, Nr. 7/8, Juli 1998 (1998-07), Seiten 496-498,500, XP000769039 ISSN: 0001-2785
- PATENT ABSTRACTS OF JAPAN Bd. 002, Nr. 151 (M-043), 18. Dezember 1978 (1978-12-18) -& JP 53 121341 A (HITACHI LTD), 23. Oktober 1978 (1978-10-23)

## Beschreibung

Die Erfindung betrifft eine elektrische Heizungsanordnung, insbesondere für ein Kraftfahrzeug.

Aus der DE 101 44 757 A1 ist eine Heizungsanordnung mit einem PTC-Element für Personenfahrzeuge bekannt, wobei eine Zusatzheizung mit einem Heizkörper, der im Betrieb der Zusatzheizung von Heizluft durchströmt wird, und mit mindestens einer Luftaustrittsöffnung im Fußbereich eines Fahrgastraumes versehen ist, zu der die Heizluft geleitet wird. Um auf flexible Weise eine vertikale Temperaturschichtung im Fahrgastraum erzeugen zu können, die insbesondere auch an Sitzen im Fond als angenehm empfunden wird, ist der Heizkörper als ein elektrisches PTC-Element gestaltet, welches unmittelbar an der Luftaustrittsöffnung im Fußbereich angeordnet ist. Ein derartiger Zuheizer lässt noch Wünsche offen. Gemäß einem Ausführungsbeispiel ist ein PTC-Element in Gestalt mehrerer Heizwaben in einem nicht näher beschriebenen Kunststoff-Rahmen angeordnet, der die Luftaustrittsöffnung einfasst. Hierbei kann es zu Problemen bei der elektrischen Kontaktierung kommen.

Des Weiteren offenbart die DE 2818457 einen Ventilator für ein Kraftfahrzeug, der ein zweigeteiltes Gehäuse aufweist, das im Inneren ein Radialgebläse und einen Heizleiter aufnimmt.

Die JP 60-029323 offenbart einen elektrischen Heizer mit einem zweiteiligen Gehäuse und einem elektrisch betreibbaren Heizelement, wobei im Bereich einer elektrischen Kontaktierung vorgesehene Stege in das Gehäuse integriert sind, welche die elektrisch kontaktierenden Elemente fixieren und ein Lösen des elektrischen Kontakts verhindern.

Es ist Aufgabe der Erfindung, eine verbesserte elektrische Heizungsanordnung zur Verfügung zu stellen, die eine sichere elektrische Kontaktierung auch bei großem Stromdurchfluss ermöglicht.

Diese Aufgabe wird gelöst durch eine elektrische Heizungsanordnung mit den Merkmalen des Anspruchs 1. Vorteilhafte Ausgestaltungen sind Gegenstand der Unteransprüche.

Erfindungsgemäß ist eine elektrische Heizungsanordnung, insbesondere für ein Kraftfahrzeug, mit einem mindestens zweiteiligen Gehäuse vorgesehen, durch welches im Bedarfsfall zu erwärmende Luft strömt, wobei mindestens ein elektrisch betreibbares Heizelement im Gehäuse angeordnet ist. Hierbei ist die elektrische Kontaktierung des Heizelements mit einem Kabel, insbesondere mit einem Rundkabel, im Gehäuse angeordnet. Die beiden Teile des Gehäuses sind miteinander verbindbar, insbesondere mittels mindestens einer Clipsverbindung, wobei die Clipsverbindung seitlich des elektrischen Heizelements im Bereich dessen elektrischer Kontaktierung angeordnet ist. Dabei unterstützen die im Bereich der elektrischen Kontaktierung vorgesehenen Clipsverbindungen den sicheren Zusammenhalt des Gehäuses und somit auch, dass sich die elektrischen Verbindungen auch bei einer gewissen Zugbelastung oder bei einer leichten Längsverschiebung des Heizelements nicht lösen, wobei vorzugsweise eine Kontakthülse, die Teil der elektrischen Kontaktierung ist, einen gewissen Längenausgleich ermöglicht.

Im Bereich der elektrischen Kontaktierung vorgesehene Stege sind in das Gehäuse integriert, welche die elektrisch kontaktierenden Elemente fixieren und ein Lösen des elektrischen Kontakts verhindern, so dass eine sichere elektrische Kontaktierung möglich ist. Um Zugbelastungen am Kabel besser aufnehmen zu können, sind die Stege in einem Winkel ungleich 0° und 90°, insbesondere in einem Winkel von 45° +/- 20°, insbesondere bevorzugt ca. 45°, zur Längsrichtung der Kontaktbleche angeordnet. Die Stege sind zudem schräg und versetzt bezüglich einer Kabeldurchführung für das Stromkabel angeordnet, so dass das durch eine Kabeldurchführung in das Gehäuse geführte Stromkabel mindestens an einer Stelle umgelenkt wird, wodurch Zugbelastungen aufgenommen werden können.

Die elektrische Kontaktierung zwischen Kontaktblech und Stromkabel, wobei es sich bevorzugt um ein Rundkabel handelt, erfolgt vorzugsweise mittels. einer Kontakthülse und gegebenenfalls mittels eines Zwischenelements, das zwischen Kontaktblech und Kontakthülse angeordnet ist und das Kontaktblech verlängert. Dabei ist die Kontakthülse bevorzugt in Richtung der Stege verlaufend angeordnet.

Das elektrische Heizelement umfasst mindestens ein PTC-Element. Dabei sind auf beiden Seiten des PTC-Elements Kontaktbleche angeordnet, welche der elektrischen Kontaktierung dienen. Die Verbindung zwischen Kontaktblechen und PTC-Element erfolgt vorzugsweise mittels einer Klebe-Verbindung.

Auf der dem PTC-Element abgewandten Seite des Kontaktblechs ist bevorzugt eine Wellrippe sowie gegebenenfalls weitere Kontaktbleche, PTC-Elemente und Wellrippen mittels Klebe-Verbindungen, welche vorzugsweise durch einen Zwei-Komponenten-Silikon-Klebstoff gebildet sind, angebracht.

Mindestens zwei Kontaktbleche sind derart ausgebildet, dass sie an ihrem einen Ende als Teil eines Steckers ausgebildet sind, welcher zur elektrischen Kontaktierung seitlich über die von Luft durchströmte Fläche mit Wellrippen hinausragt.

Das Gehäuse weist mindestens eine isolierende Trennwand auf, welche sicherstellt, dass ein Kurzschluss innerhalb des elektrischen Heizelements, also insbesondere zwischen zwei nur von einem PTC-Element getrennten Kontaktblechen, vermieden wird. Die Trennwand ist hierbei sowohl am Gehäuseoberteil als auch am Gehäuseunterteil ausgebildet, so dass die Trennung der Kontaktbleche auch in einem seitlichen Bereich sichergestellt ist. Zudem können die Trennwände der Zentrierung des Gehäuseoberteils auf dem Gehäuseunterteil dienen.

Bevorzugt ist das Gehäuse im Bereich, in welchem das elektrische Heizelement angeordnet ist, als Kunststoffgehäuse ausgebildet. Eine zweiteilige Ausgestaltung ermöglicht eine einfache und schnelle Montage bei guten Festigkeitseigenschaften. Ferner lässt sich das Gehäuse einfach mittels Spritzgießens herstellen. Die beiden Gehäuseteile sind bevorzugt mittels Clipsverbindungen, insbesondere auch auf der Gehäuseaußenseite, miteinander verbunden, so dass keine Verbindungselemente in den Innenraum ragen und den Strömungskanal beeinflussen.

Das Gehäuse ist bevorzugt spiegelsymmetrisch bezüglich einer Mittelquerachse ausgebildet, wobei an beiden Seiten Positionierungselemente für eine elektrische Kontaktierung vorgesehen sind, die elektrische Kontaktierung aber nur auf einer der beiden Seiten angeordnet ist. Dies ermöglicht die Verwendung eines Gehäuses für verschiedene Varianten, bei denen der Stromanschluss an unterschiedlichen Seiten des Gehäuses vorgesehen ist, so dass nur ein Werkzeug für das Gehäuse vorgesehen werden muss.

Vorteilhafterweise ist eine erfindungsgemäße elektrische Heizungsanordnung, insbesondere als Zusatzheizung, für eine Kraftfahrzeug- Heizungs- und/oder Klimatisierungseinrichtung vorgesehen, wobei diese zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

Im Folgenden wird die Erfindung anhand eines Ausführungsbeispiels unter Bezugnahme auf die Zeichnung im Einzelnen erläutert. In der Zeichnung zeigen:
- Fig. 1: eine perspektivische Ansicht auf eine erfindungsgemäße Heizungsanordnung mit geöffnetem Gehäuse,
- Fig. 2: eine Fig. 1 entsprechende Ansicht des Gehäuses,

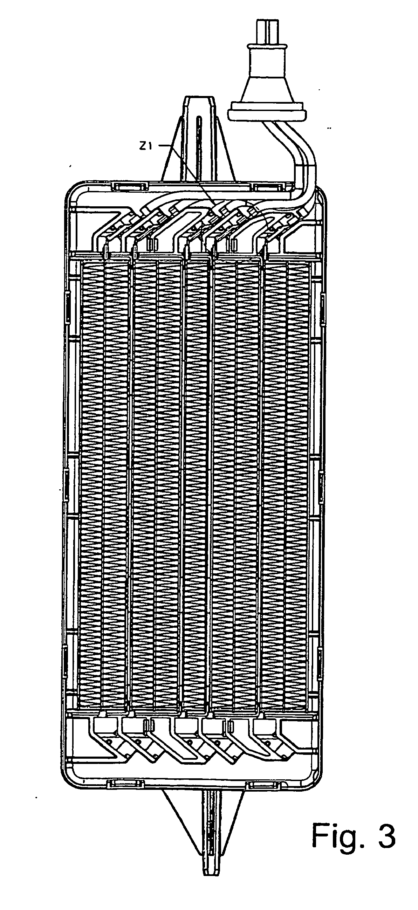

- Fig. 3: eine Draufsicht auf das offene Gehäuse mit der Heizungsanordnung,
- Fig. 4: eine Detaildarstellung des Bereichs Z1 von Fig. 3,

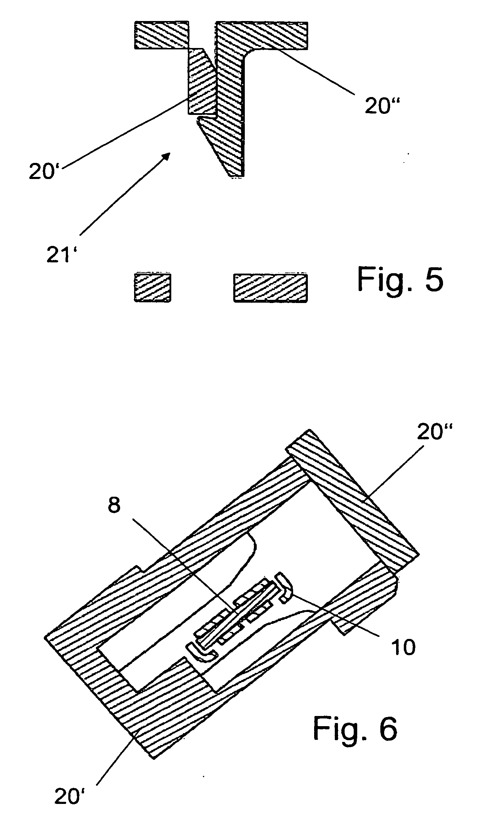

- Fig. 5: einen Schnitt entlang Linie A-A in Fig. 4,
- Fig. 6: einen Schnitt entlang Linie B-B in Fig. 4,
- Fig. 7: einen Schnitt entlang Linie C-C in Fig. 4,
- Fig. 8: einen Schnitt entlang Linie D-D in Fig. 4, und

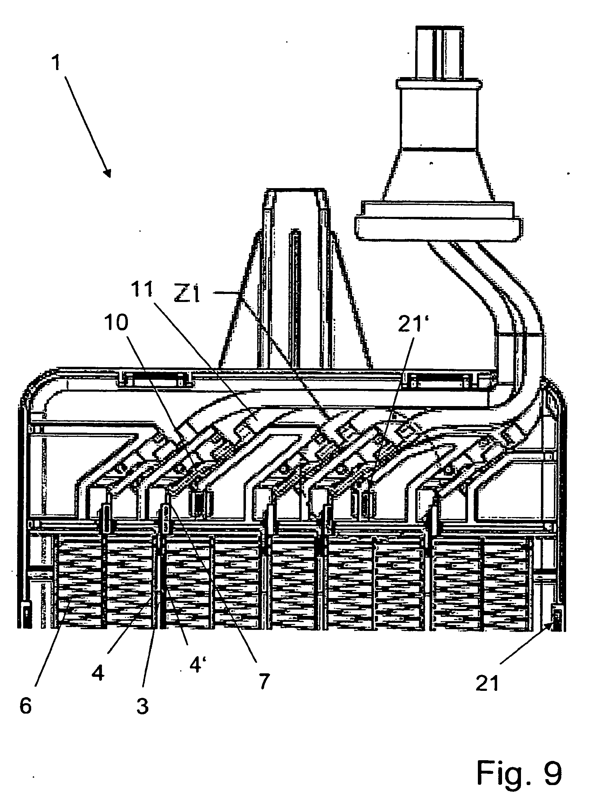

- Fig. 9: eine vergrößerte Darstellung des oberen Bereichs von Fig. 3.

Bei einer als Zuheizer dienenden PTC-Heizungsanordnung 1 einer Kraftfahrzeug-Klimaanlage mit mehreren ein elektrisches Heizelement 2 in Form eines Heizgitters bildenden PTC-Elementen 3 sind die PTC-Elemente 3 auf an sich bekannte Weise zwischen zwei Kontaktblechen 4, 4' eingeklebt, vorliegend mittels eines Zwei-Komponenten-Silikon-Klebstoffes, wobei eines der Kontaktbleche, in der Zeichnung mit dem Bezugszeichen 4' versehen, im Wesentlichen rechteckförmig ausgebildet ist und mit seinem seitlich über das PTC-Element 3 überstehenden Ende einen Teil eines elektrischen Kontakts 5 bildet. Das mit dem Bezugszeichen 4 bezeichnete Kontaktblech ist im Wesentlichen rechteckförmig ausgebildet und parallel zum anderen Kontaktblech 4' angeordnet.

Auf den jeweils dem PTC-Element 3 gegenüberliegenden Seiten der Kontaktbleche 4 und 4' sind mittels einer entsprechenden Klebe-Verbindung Wellrippen 6 angebracht und an diesen, ebenfalls wiederum mit einer entsprechenden Klebe-Verbindung je ein weiteres Kontaktblech 4 und 4', wobei diese Kontaktbleche den zuvor beschriebenen Kontaktblechen 4 und 4' entsprechen.

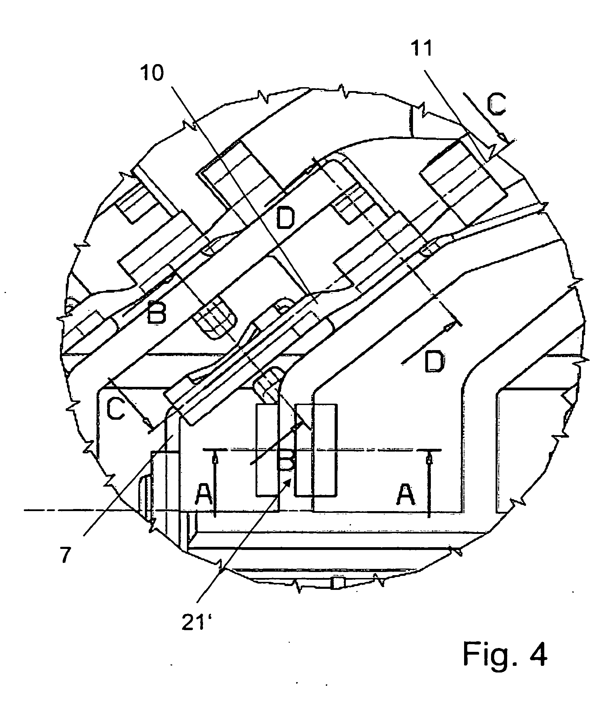

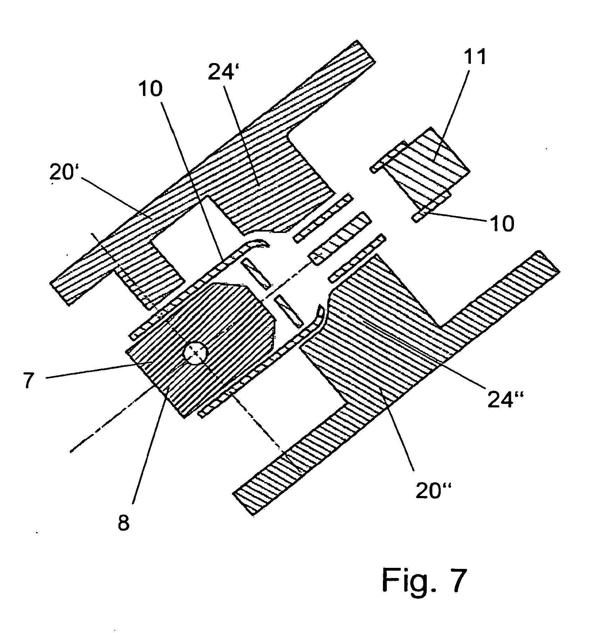

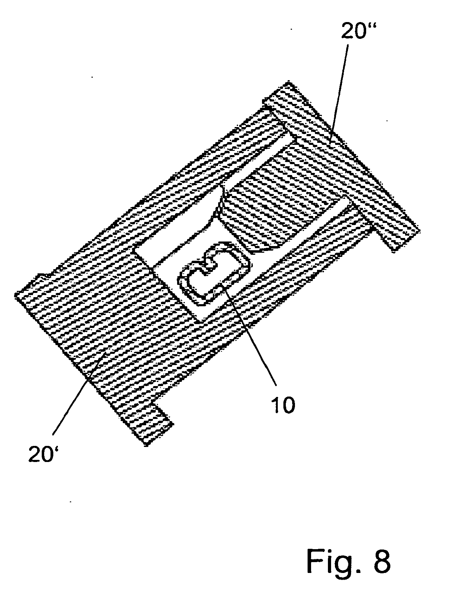

Für die Herstellung eines elektrischen Kontakts ist das verlängerte Kontaktblech 4' mit einem Zwischenelement 7 fest verbunden oder gegebenenfalls einstückig ausgebildet, welches etwas schmäler ausgebildet ist und eine in einem Winkel von 45° zum Kontaktblech 4' verlaufende Zunge 8 aufweist, auf welche elektrisch kontaktierend eine Kontakthülse 10 aufgeschoben ist, die auf der anderen Seite elektrisch kontaktierend fest mit einem Rundkabel 11 verbunden ist. Die Mittellängsachse des Zwischenelements 7 und des Rundkabels 11 im in der Kontakthülse 10 eingespannten Bereich fluchten vorliegend miteinander (vgl. Fig. 4). Die Kontakthülse 10 ist ein metallisches Stanzbiegeteil und weist drei Bereiche auf, wobei der erste Bereich über die Zunge 8 geschoben ist. In ihm sind elastisch verformbare Bereiche vorgesehen die von zumindest einer Flachseite her an der Zunge 8 federnd unter Vorspannung anliegen. Ferner sind zwischen dem ersten Bereich und dem mittleren, zweiten Bereich Endanschläge für die Zunge 8 vorgesehen (vgl. Fig. 7). Der mittlere, zweite Bereich (vgl. Fig. 8) bildet den Übergang zum dritten Bereich , in welchem die Kontakthülse 10 über das Rundkabel 11 geschoben ist.

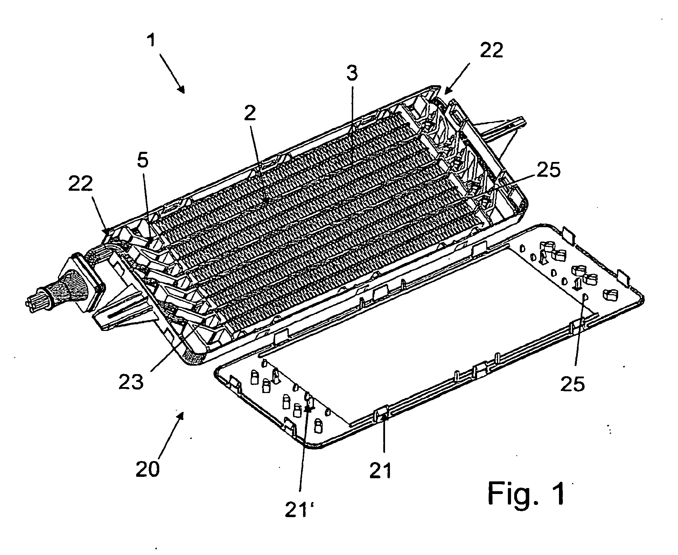

Um die zuvor beschriebene Anordnung herum ist ein zweiteiliges Kunststoff-Gehäuse 20 angeordnet, welches in einem Luftführungskanal der Kraftfahrzeug-Klimaanlage angeordnet ist. Dabei ist das Gehäuse 20 nicht mittig geteilt, sondern, wie beispielsweise aus Fig. 1 ersichtlich, das Gehäuseunterteil 20' bildet den größten Teil des Gehäuses 20, und das Gehäuseoberteil 20" ist im Wesentlichen als Deckel ausgestaltet, wobei die Ränder des Deckels leicht nach unten heruntergezogen sind. Diese Ausgestaltung der Gehäuseteile 20' und 20" hilft Zusammenbaufehler zu vermeiden. Das Gehäuse 20 ist vorliegend im Wesentlichen spiegelsymmetrisch zur Mittelquerachse ausgebildet, wobei jedoch die elektrische Kontaktierung vorliegend nur auf einer Seite erfolgt. Auf Grund der spiegelsymmetrischen Ausgestaltung kann die elektrische Kontaktierung entsprechend auch auf der anderen Seite vorgesehen sein, so dass ein Gehäuse 20 für verschiedene Anwendungen benutzt werden kann. Die Anordnung im Kraftfahrzeug ist vorliegend im Bereich unterhalb der vorderen Sitzreihe, so dass die Heizungsanordnung 1 die der zweiten Sitzreihe zugeführte Luft bei Bedarf erwärmt.

Die beiden Teile des Gehäuses 20 sind mittels Clipsverbindungen 21 unter Einlage des Heizelements 2 fest miteinander verbunden. Die Clipsverbindungen 21 ermöglichen zusätzlich eine Positionierung im Rahmen der Montage. Zur Durchführung der Rundkabel 11 sind im Bereich der Ecken in Längsrichtung offene Kabeldurchführungen 22 vorgesehen, wobei vorliegend nur eine der beiden spiegelsymmetrischen Kabeldurchführungen 22 für eine Kabeldurchführung verwendet ist (vgl. Fig. 1).

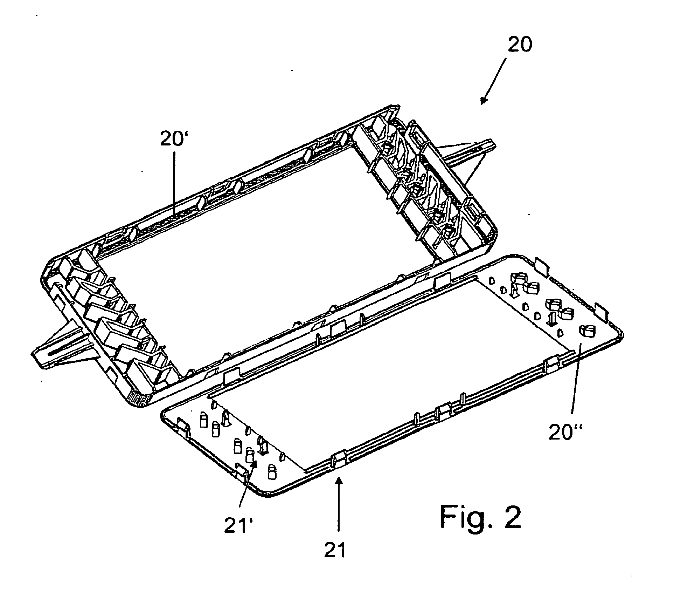

Im Bereich zwischen der elektrischen Kontaktierung der Kontaktbleche 4' und der elektrischen Kontaktierung der Rundkabel 11 sind am Gehäuseunterteil 20' und am Gehäuseoberteil 20" Positionierungselemente 23 ausgebildet, welche eine exakte Positionierung der entsprechenden Bereiche ermöglichen und diese im zusammengebauten Zustand des Gehäuses 20 sicher fixieren. Als Positionierungselemente 23 dienen vorstehende Stege am Gehäuseunterteil 20'. Die Stege am Gehäuseunterteil 20' sind entsprechend dem Verlauf der Zwischenelemente 7, also in einem 45°-Winkel abgewinkelt, ausgebildet (vgl. Fig. 2). Ferner sind zur Positionierung zwischen dem Gehäuseunterteil 20' und dem Gehäuseoberteil 20" weitere Stege 24' am Gehäuseunterteil 20' und Stege 24" am Gehäuseoberteil 20" vorgesehen, die im Wesentlichen in Zusammenbaurichtung miteinander fluchtend und symmetrisch zur Mittellängsachse der Kontakthülse 10 angeordnet sind (vgl. Fig. 7).

Um die Fixierung optimal zu sichern sind auch im Bereich zwischen der elektrischen Kontaktierung der Kontaktbleche 4' und der elektrischen Kontaktierung der Rundkabel 11 Clipsverbindungen 21' vorgesehen, wobei vorliegend vier Federarme am Gehäuseoberteil 20" und vier hiermit zusammenwirkende Hinterschneidungen am Gehäuseunterteil 20' ausgebildet sind. Diese Clipsverbindungen 21' am Gehäuse 20 bilden eine Art Verschlusssystem zur Sicherung der elektrischen Kontaktierung. Die schräge Anordnung der Stege 24' und 24" stellen auch bei einer gewissen Zugbelastung sicher, dass die elektrische Kontaktierung des Heizelements 2 mit Hilfe der Kontakthülse 10 nicht gestört wird.

Ferner sind am Gehäuseunterteil 20' und am Gehäuseoberteil 20" vorstehende Trennwände 25 ausgebildet, welche die beiden auf den beiden Seiten eines PTC-Elements 3 angeordneten Kontaktbleche 4 und 4' oder 4 voneinander beabstandet halten und sicherstellen, dass zwischen denselben kein Kurzschluss auftritt. Hierbei verlaufen die Trennwände 25 im Gehäuseunterteil 20' rippenartig in Zusammenbaurichtung, während die Trennwände 25 im Gehäuseoberteil 20" als in Zusammenbaurichtung vorstehende Vorsprünge ausgebildet sind.

Für den Zusammenbau wird das elektrische Heizelement 2 mitsamt seiner elektrischen Kontaktierung einschließlich der Rundkabel 11 im Gehäuseunterteil 20' positioniert, anschließend wird das Gehäuseoberteil 20" aufgesetzt und mit Hilfe der Clipsverbindungen 21 und 21' am Gehäuseunterteil 20' fixiert, so dass das Heizelement 2 einschließlich der elektrischen Kontaktierung desselben sicher und gut fixiert im Inneren des Gehäuses 20 eingeschlossen ist.

### Bezugszeichenliste

1 Heizungsanordnung
2 Heizelement
3 PTC-Element
4 Kontaktblech
4' verlängertes Kontaktblech
5 elektrischer Kontakt
6 Wellrippe
7 Zwischenelement
8 Zunge
10 Kontakthülse
10' erster Bereich
10'' zweiter Bereich
10''' dritter Bereich
11 Rundkabel
20 Gehäuse
20' Gehäuseteil, Gehäuseunterteil
20'' Gehäuseteil, Gehäuseoberteil
21, 21' Clipsverbindung
22 Kabeldurchführung
23 Positionierungselement
24', 24" Steg
25 Trennwand

## Patentansprüche

1. Elektrische Heizungsanordnung, insbesondere für ein Kraftfahrzeug, mit einem mindestens zweiteiligen Gehäuse (20), durch welches im Bedarfsfall zu erwärmende Luft strömt, und mindestens einem elektrisch betreibbaren Heizelement (2), das im Gehäuse (20) angeordnet ist, wobei die elektrische Kontaktierung des Heizelements (2) mit einem Kabel (11) im Gehäuse (20) angeordnet ist und die beiden Teile (20', 20") des Gehäuses (20) miteinander verbindbar sind, wobei, im Bereich der elektrischen Kontaktierung vorgesehene Stege (24', 24") in das Gehäuse (20) integriert sind, welche die elektrisch kontaktierenden Elemente fixieren und ein Lösen des elektrischen Kontakts verhindern, wobei die Stege (24', 24") in einem Winkel ungleich 0° und 90° zur Längsrichtung der Kontaktbleche angeordnet sind, die Stege (24', 24") schräg und versetzt bezüglich einer Kabeldurchführung für das Stromkabel angeordnet sind und das elektrische Heizelement (2) mindestens ein PTC-Element (3) umfasst, wobei auf beiden Seiten des PTC-Elements (3) Kontaktbleche (4, 4') angebracht sind, und mindestens zwei Kontaktbleche (4') derart ausgebildet sind, dass sie an ihrem einen Ende als Teil eines Steckers (5) ausgebildet sind und das Gehäuse (20) mindestens eine isolierende Trennwand (25) aufweist, welche sicherstellt, dass ein Kurzschluss innerhalb des elektrischen Heizelements (2) vermieden wird, wobei die Trennwand (25) am Gehäuseoberteil (20") und am Gehäuseunterteil (20') ausgebildet ist und die Trennwand (25) zwischen zwei Kontaktbleche (4, 4') in Verlängerung eines dazwischen angeordneten PTC-Elements (3) ragt.

2. Elektrische Heizungsanordnung nach Anspruch 1, **dadurch gekennzeichnet, dass** die beiden Teile (20', 20") des Gehäuses mittels mindestens einer Clipsverbindung (21') miteinander verbindbar sind.

3. Elektrische Heizungsanordnung nach einem der vorhergehenden Ansprüche, **dadurch gekennzeichnet, dass** die Clipsverbindung (21') seitlich des elektrischen Helzelements (2) im Bereich dessen elektrischer Kontaktierung angeordnet ist.

4. Elektrische Heizungsanordnung nach einem der vorhergehenden Ansprüche, **dadurch gekennzeichnet, dass** der Winkel 45° +/- 20° beträgt, insbesondere etwa 45°.

5. Elektrische Heizungsanordnung nach einem der vorhergehenden Ansprüche, **dadurch gekennzeichnet, dass** die elektrische Kontaktierung zwischen Kontaktblech (4') und Stromkabel (11) mittels einer Kontakthülse (10) und gegebenenfalls mittels eines Zwischenelements (7), das zwischen Kontaktblech (4') und Kontakthülse (10) angeordnet ist und das Kontaktblech (4') verlängert, erfolgt.

6. Elektrische Heizungsanordnung einem der vorhergehenden Ansprüche, **dadurch gekennzeichnet, dass** das Gehäuse (20) spiegelsymmetrisch bezüglich einer Mittelquerebene ausgebildet ist, wobei an beiden Seiten Positionierungselemente für eine elektrische Kontaktierung vorgesehen sind, die elektrische Kontaktierung aber nur auf einer der beiden Seiten angeordnet ist.

7. Elektrische Heizungsanordnung einem der vorhergehenden Ansprüche, **dadurch gekennzeichnet, dass** das Gehäuse (20) im Bereich, in welchem das elektrische Heizelement (2) angeordnet ist, zweiteilig als Kunststoff-Gehäuse (20) ausgebildet ist.

8. Kraftfahrzeug- Heizungs- und/oder Klimatisierungseinrichtung mit einer elektrische Heizungsanordnung nach einem der vorhergehenden Ansprüche, **dadurch gekennzeichnet, dass** die Kraftfahrzeug-, Heizungs-, und/oder Klimatisierungseinrichtung zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

## Claims

1. Electric heating device, in particular for a motor vehicle, with an at least two-part housing (20) through which air to be healed flows if required, and with at least one electrically operated heating element (2) located in the housing (20), wherein the Electric contacting of the heating element (2) with a cable (11) is arranged in the housing (20) and the two parts (20', 20") of the housing (20) can be joined together, wherein webs (24', 24") provided in the region of the electric contacting are integrates into the housing (20) to retain the electrically contacting elements and prevent a break of the electric contact, wherein the webs (24', 24") are arranged at an angle other than to degrees and 90 degrees to the longitudinal direction of the contact plates, the webs (24', 24") are inclined and offset relative to a cable gland for the power cable, and the electric heating element (2) includes at least one PTC element (3), wherein contact plates (4, 4') are amounted on both sides of the PTC element (3), and at least two contact plates (4') are designed such that they form part of a plug (5) at one of their ends, and the housing (20) is provided with at least one insulating partition (25) which prevents a short circuit within the electric heating element (2), wherein the partition (25) is formed on the housing upper part (20") and on the housing lower part (20') and the partition (25) projects between two contact plates (4, 4') in extension of a PTC element (3) placed in between.

2. Electric heating device according to claim 1, **characterised in that** the two parts (20', 20") of the housing can be joined to one another by means of at least one clip connection (21).

3. Electric heating device according to any of the preceding claims, **characterised in that** the clip connection (21') is located on the side of the electric heating element (2) in the region of its Electric contacting.

4. Electric heating device according to any of the preceding claims, **characterised in that** the angle is 45 degrees +/-20 degrees, in particular approximately 45 degrees.

5. Electric heating device according to any of the preceding claims, **characterised in that** the Electric contacting between the contact plate (4') and the power cable (11) is established by means of a contact bush (10) and possibly by means of an intermediate element (7) placed between the contact plate (4') and the contact bush (10) and forming an extension of the contact plate (4').

6. Electric heating device according to any of the preceding claims, **characterised in that** the housing (20) is designed mirror-symmetrical relative to a central transverse plane, wherein positioning elements for electric contacting are provided can both sides but the electric contacting is arranged of only one of the two sides.

7. Electric heating device according to any of the preceding claims, **characterised in that** the housing (20) is designed as a two-part plastic housing (20) in the region where the electric heating element (2) is located.

8. Motor vehicle heater and/or air conditioner with an electric heating device according to any of the preceding claims, **characterised in that** the motor vehicle heater and/or air conditioner comprises at least one of the following components: heat exchanger, radiator, evaporator, filter, temperature blend door, one or more flow ducts and one or more control dampers for the distribution of air among the outlet ducts.

## Revendications

1. Dispositif de chauffage électrique, en particulier pour un véhicule automobile, comprenant un boîtier (20) a moins en deux parties, boîtier à travers lequel s'écoule, si nécessaire, de l'air à réchauffer, et au moins un élément chauffant (2) fonctionnant électriquement, qui est disposé dans le boîtier (20), où la mise en contact électrique de l'élément chauffant (2), avec un câble (11), est disposée dans le boîtier (20), et les deux parties (20', 20") du boîtier (20) peuvent être assemblées l'une à l'autre, où des parties pleines (24', 24") prévues dans la zone de la mise en contact électrique sont intégrées au boîtier (20), parties pleines qui fixent les élément se mettant en contact électriquement et empêchent une déconnexion du contact électrique, où les parties pleines (24', 24") sont disposées suivant un angle différent de 0° et de 90° par rapport à la direction longitudinale des tôles de contact, les parties pleines (24', 24") sont disposées en obliqué et de façon décalée par rapport à un passage de câble prévu pour le câble d'alimentation en courant, et l'élément chauffant électrique, (2) comprend au moins un élément (3) à coefficient de température positif (CTP), où des tôles de contact (4, 4') sont fixées des deux côtes de l'élément (3) à coefficient de température positif (CTP), et au moins deux tôles de contact (4') sont configurées de manière telle, qu'elles soient configurées, au niveau de l'une de leurs extrémités, comme faisant partie d'une fiche mâle (5), et le boîtier (20) présente au moins une paroi de séparation isolante (25) qui garantit qu'un court-circuit est évité à l'intérieur de l'élément chauffant électrique (2), où la paroi de séparation (25) est configurés sur la partie supérieure (20") du boîtier et sur la partie inférieure (20') du boîtier, et la paroi de séparation (25) fait saillie entre deux tôles de contact (4, 4'), dans le prolongement d'un élément (3) à coefficient de température positif (CTP) disposé entre ces deux tôles de contact.

2. Dispositif de chauffage électrique, selon la revendication 1, **caractérisé en ce que** les deux parties (20', 20") du boîtier peuvent être assemblées l'une à l'autre au moyen au moins d'un assemblage clipsé (21').

3. Dispositif de chauffage électrique selon l'une ou l'autre des revendications précédente, **caractérisé en ce que** l'assemblage clipsé (21') est disposé latéralement par rapport à l'élément chauffant électrique (2), dans la zone de sa mise en contact électrique.

4. Dispositif de chauffage électrique selon l'une quelconque des revendications précédente, **caractérisé en ce que** l'angle est égal à 45° +/- 20°, en particulier à peu près égal à 45°.

5. Dispositif de chauffage électrique selon l'une quelconque des revendications précédentes, **caractérisé en ce que** la mise en contact électrique entre la tôle de contact (4') et le câble d'alimentation en courant (11) est réalisée au moyen d'une douille de contact (10) et, le cas échéant, au moyen d'un élément intermédiaire (7) qui est disposé entre la tôle de contact (4') et la douille de contact (10) et prolongé la tôle de contact (4').

6. Dispositif de chauffage électrique selon l'une quelconque des revendications précédentes, **caractérisé en ce que** le boîtier (20) est configure de façon symétrique par rapport à un plan transversal médian, où il est prévu, sur les deux côtés, des éléments de positionnement pour une mise en contact électrique, mais la mise sen contact électrique n'est disposée que sur l'un des deux côtés.

7. Dispositif de chauffage électrique selon ligne quelconque des revendication précédentes, **caractérisé en ce que** le boîtier (20), dans la zone dans laquelle est disposé l'élément chauffant électrique (2), est configuré en deux parties, comme boîtier (20) en matière plastique.

8. Dispositif de chauffage et / où de climatisation d'un véhicule automobile comprenant un Dispositif de chauffage électrique selon l'une quelconque des revendications précédentes, **caractérisé en ce que** le dispositif de chauffage et / ou de climatisation du véhicule automobile comprend au moins l'un des composants suivants : un échangeur de chaleur, un radiateur, un évaporateur, un filtre, un volet mélangeur de température, une chambre de mélange, un ou plusieurs conduits d'écoulement et une ou plusieurs volets de commande servant à la répartition de l'air aux conduits de sortie.
